# FASCICULE DE BREVET EUROPEEN

(11) **EP 1 756 404 B1**
(45) Date de publication et mention de la délivrance du brevet: **26.08.2009**
(21) Numéro de dépôt: 05805026.1
(22) Date de dépôt: 25.05.2005
(51) Int. Cl.: F01N 7/18

(54) **SUPPORT D'ECHAPPEMENT DE VEHICULE AUTOMOBILE, DISPOSITIF DE FIXATION POURVU D'UN TEL SUPPORT, ET PROCEDE DE FIXATION D'UN TEL SUPPORT**
AUSPUFFHALTERUNG FÜR EIN KRAFTFAHRZEUG, EINE SOLCHE HALTERUNG UMFASSENDE BEFESTIGUNGSVORRICHTUNG UND VERFAHREN ZUR BEFESTIGUNG SOLCH EINER HALTERUNG
EXHAUST MOUNTING FOR A MOTOR VEHICLE, FIXING DEVICE COMPRISING ONE SUCH MOUNTING, AND METHOD FOR FIXING ONE SUCH MOUNTING

(30) Priorité: 01.06.2004 FR 0405871
(43) Date de publication de la demande: 28.02.2007
(73) Titulaire: Renault SAS, 92100 Boulogne Billancourt (FR)
(72) Inventeur: KOWALSKI, Philippe, F-78180 MONTIGNY LE BRETONNEUX (FR); JAMESSE, Gérard, F-78280 GUYANCOURT (FR)
(74) Mandataire: Guyon, Rodolphe C.
(86) Numéro de dépôt international: PCT/FR2005/050359
(87) Numéro de publication internationale: WO 2006/027504

(56) Documents cités:
- EP-A- 0 306 582
- US-A- 5 542 707
- US-A1- 2003 057 348
- US-A1- 2003 106 735

## Description

L'invention concerne un support d'échappement de véhicule automobile, un dispositif de fixation pourvu d'un tel support ainsi qu'un procédé de fixation d'un tel support.

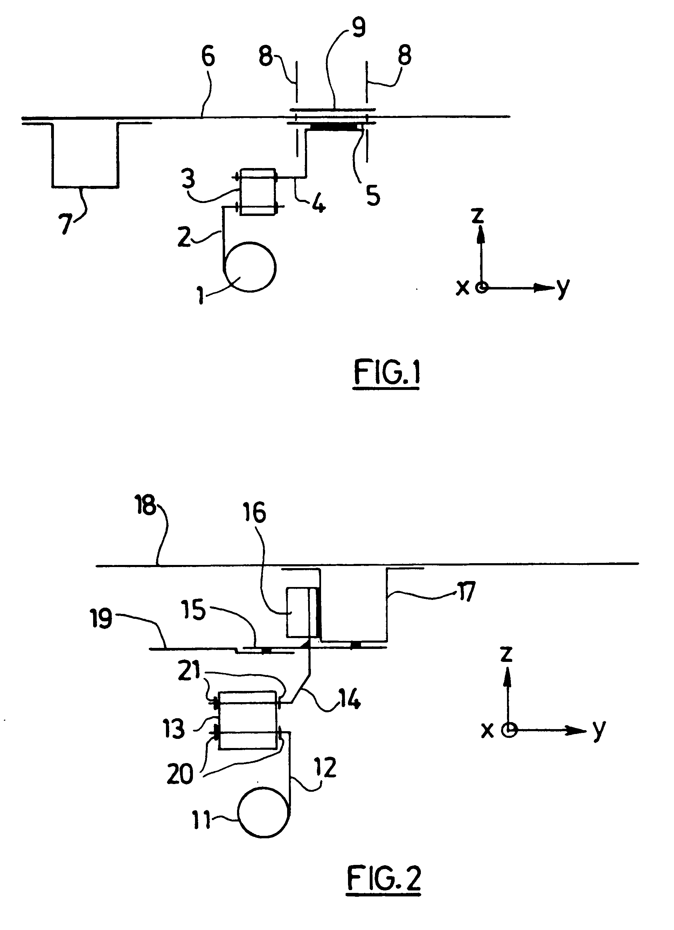

Un dispositif de fixation d'échappement de véhicule automobile selon l'art antérieur est représenté schématiquement sur la figure 1. L'échappement 1 du moteur est soudé à un fil de support 2 dont l'autre extrémité est insérée et maintenue sensiblement horizontalement dans un filtre en caoutchouc 3 destiné à amortir les vibrations. Dans le filtre 3, au dessus du fil de support 2 de l'échappement, est inséré une extrémité d'un autre fil 4, sensiblement en forme de marche d'escalier, dont l'autre extrémité horizontale est soudée sous une plaque de renfort 5. Cette dernière est vissée sur le plancher 6 du véhicule, lui-même supporté par un longeron 7. Les axes des vis sont désignés par les références 8 sur la figure. Une autre plaque de renfort 9 est généralement placée de l'autre côté du plancher 6 par rapport à la première plaque 5.

Un tel dispositif présente l'inconvénient de nécessiter de nombreuses pièces, rendant le montage complexe. Par ailleurs, en raison de la faible épaisseur du plancher, un effet "peau de tambour" peut être observé, à savoir une transmission des vibrations de l'échappement au plancher, ce qui induit généralement un bruit indésirable et peut fragiliser la fixation.

La diminution des vibrations transmises au plancher peut être obtenue en rapprochant le dispositif de fixation du longeron, plus épais et moins sensible aux vibrations que le plancher. Toutefois, en raison de son encombrement, un tel dispositif de fixation ne peut être placé suffisamment près du longeron pour obtenir une réduction significative des vibrations transmises. Une autre solution consiste à renforcer les pièces du dispositif de fixation, ce qui rend davantage complexe le montage de ce dernier.

On connaît par ailleurs par US 2003/057348 A1 (ARCIERO CARLO ET AL) un support d'échappement dont le fil support de l'échappement est directement relié au châssis du véhicule.

L'invention vise à pallier ces inconvénients en proposant un support d'échappement pour véhicule automobile présentant une structure simple et facile à monter, ainsi qu'un faible encombrement. L'invention propose également un procédé de fixation de ce support permettant de limiter la transmission des vibrations de l'échappement au plancher du véhicule.

A cet effet, un premier objet de l'invention concerne un support d'échappement de véhicule automobile conforme à la revendication 1.

La fixation au plancher est ainsi réalisée de manière simple en une seule pièce compacte.

Avantageusement, la pièce de fixation est une patte de fixation présentant une gorge apte à recevoir l'extrémité supérieure du fil suivant sa direction axiale, la profondeur de la gorge étant suffisante pour que les faces de la patte situées de part et d'autre de la gorge puissent être fixées sur une paroi verticale du véhicule en appuyant l'extrémité supérieure du fil contre cette paroi. La pièce de fixation peut ainsi être réalisée de manière simple tout en permettant une bonne transmission des vibrations au véhicule.

Avantageusement, le bord supérieur de la patte de fixation est pourvu de deux languettes s'étendant sensiblement parallèlement à la plaque de renfort du côté opposé à l'ouverture de la gorge. Ces languettes servent de butée contre le plancher ou une partie du longeron, permettant ainsi un positionnement correct du support d'échappement suivant la direction verticale.

Avantageusement, l'extrémité supérieure du fil est solidarisée à la pièce de fixation par soudage. Toutefois, d'autres types de fixation. peuvent être envisagés en fonction de la structure de la pièce de fixation afin de permettre une bonne transmission des vibrations subies par le fil.

L'invention concerne également un dispositif de fixation d'un échappement de véhicule automobile, le véhicule automobile comportant un longeron supportant un plancher et un sous-plancher, le dispositif comportant un filtre amortisseur de vibrations auquel est suspendu l'échappement du véhicule au moyen d'un fil de support d'échappement et est caractérisé en ce qu'il comprend un support d'échappement selon l'invention dans lequel l'extrémité inférieure du fil de support est emboîtée dans, et supporte, le filtre amortisseur, au dessus du fil de support d'échappement.

Le support d'échappement selon l'invention présente l'avantage de pouvoir être emboîté sur les filtres amortisseurs couramment utilisés sans nécessiter de transformation de ces derniers.

Un autre objet de l'invention est un procédé de fixation sur un véhicule automobile d'un support d'échappement selon l'invention, le véhicule comportant un longeron supportant un plancher et un sous-plancher, caractérisé en ce qu'il comprend les étapes consistant à :
- souder les faces de la pièce de fixation du support sur une paroi sensiblement verticale du longeron,
- souder la plaque de renfort sensiblement horizontalement au longeron et au sous-plancher.

L'épaisseur plus importante du longeron permet d'une part une transmission et un amortissement des vibrations subies par le support d'échappement, et d'autre part la suppression d'une des plaques de renfort habituelles. La fixation par soudage permet un montage rapide et simple du support d'échappement.

Avantageusement, la plaque de renfort est soudée sous le longeron et au dessus du sous-plancher. Les efforts subis par la liaison entre la plaque de renfort et le longeron sont ainsi partiellement repris par le sous-plancher, renforçant ainsi la résistance de la fixation de la plaque de renfort.

L'invention est maintenant décrite en référence aux dessins annexés, non limitatifs, dans lesquels :
- la figure 1 est une représentation schématique d'un dispositif de fixation d'un échappement connu ;
- la figure 2 est une représentation schématique d'un dispositif de fixation selon l'invention ;
- la figure 3 est une représentation en perspective d'une partie d'un dispositif de fixation pourvu d'un support d'échappement selon l'invention ;
- la figure 4 est une représentation en perspective du support d'échappement de la figure 3.

Sur les figures, les directions X, Y et Z représentent respectivement les directions longitudinale, transversale et verticale du véhicule, l'axe X étant dirigé vers l'arrière du véhicule.

La figure 2 représente de manière symbolique un dispositif de fixation selon l'invention d'un échappement 11 d'un véhicule automobile. Le dispositif comprend un fil de support d'échappement 12, un filtre amortisseur de vibrations 13, et un support d'échappement métallique comprenant un deuxième fil de support 14, une plaque de renfort 15 et une pièce de fixation 16.

Dans toute la description, on désigne par fil, un élément allongé métallique de section cylindrique creuse ou pleine. Une section de forme différente peut toutefois être utilisée. Un tel fil est suffisamment rigide pour ne pas se déformer sous l'effet du poids de l'échappement ou des vibrations.

Le dispositif de fixation selon l'invention est plus particulièrement destiné, sans toutefois s'y limiter, à un véhicule automobile pourvu d'un longeron 17 supportant un plancher 18, et un sous-plancher 19 fixé sous le longeron. Le plancher et le sous-plancher s'étendent sensiblement parallèlement et horizontalement.

Ces pièces sont maintenant décrites dans leur position d'utilisation représentée sur les figures 2 à 4.

De manière connue, l'échappement 11 est suspendu au filtre amortisseur 13, formé d'un bloc de caoutchouc, par l'intermédiaire du fil de support d'échappement 12. A cet effet, une extrémité du fil de support 12 s'étend sensiblement horizontalement, et est insérée dans le bloc de caoutchouc du filtre amortisseur 13. Deux butées annulaires 20 solidaires du fil viennent en appui contre le filtre amortisseur 13, de part et d'autre de ce dernier, afin d'éviter toute translation de l'extrémité du fil le long de son axe dans le filtre.

Le deuxième fil de support 14 présente une extrémité inférieure 14a sensiblement horizontale similaire, également pourvue de butées annulaires 21, pour un maintien en position dans le bloc de caoutchouc du filtre 13.

La plaque de renfort 15 est traversée sensiblement perpendiculairement par l'extrémité supérieure 14b du deuxième fil de support 14. Cette dernière est fixée sur la plaque par un cordon de soudure s'étendant sur toute sa périphérie.

L'extrémité supérieure 14b du deuxième fil, située au dessus de la plaque de renfort 15, s'étend sensiblement verticalement tel que représenté sur les figures 2 à 4. Elle s'étend ainsi sensiblement perpendiculairement par rapport à l'extrémité inférieure 14a.

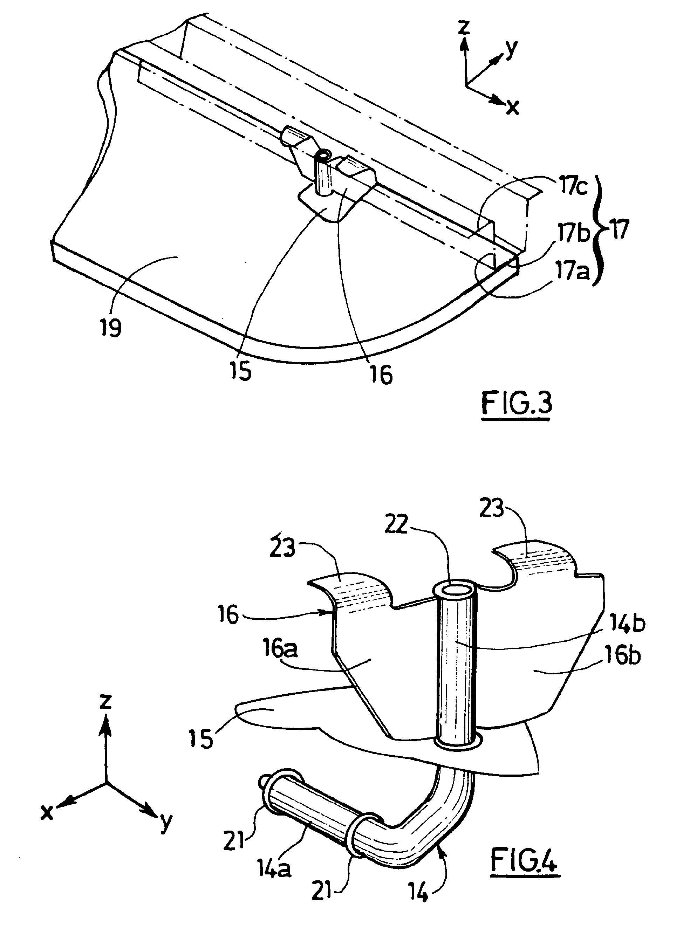

Dans l'exemple, la pièce de fixation 16 est une patte de fixation présentant sur un de ses côtés une gorge 22 apte à recevoir l'extrémité supérieure du deuxième fil 14b suivant sa direction axiale. Les faces 16a et 16b situées de part et d'autre de la gorge, sur le même côté que celle-ci, s'étendent sensiblement dans un même plan vertical. De préférence, tel que représenté sur la figure 3, la profondeur de la gorge est choisie pour que la surface du fil affleure les faces 16a et 16b ou dépasse légèrement de celles-ci afin que lorsque les faces sont fixées sur une paroi, le fil soit également en appui contre cette paroi. De préférence également, la gorge 22 épouse la forme du fil 14 pour un meilleur contact entre la pièce de fixation et le fil.

L'extrémité supérieure 14b du deuxième fil est soudée sur les bords de la gorge 22 par deux cordons de soudure s'étendant axialement, sensiblement sur toute la longueur de la patte de fixation 16. De préférence, la totalité de l'extrémité supérieure du fil, située au dessus de la plaque de renfort 15, est insérée dans la gorge.

La patte de fixation 16 présente également deux languettes de butée 23 s'étendant sensiblement horizontalement dans un même plan, et solidaires du bord supérieur horizontal des ailes 16a, 16b. Ces pattes s'étendent du côté opposé à l'ouverture de la gorge.

Bien entendu, d'autres formes de pièce de fixation peuvent être envisagées, ainsi que d'autres modes de fixation de l'extrémité supérieure du fil sur ou dans la pièce de fixation.

La fixation du support d'échappement décrit ci-dessus est, par exemple, réalisée de la manière suivante. Le support d'échappement (14, 15, 16) est d'abord réalisé en assemblant par soudage la plaque de renfort 15 et le fil 14 d'une part, et le fil 14 et la patte de fixation 16 d'autre part. Le support forme ainsi une pièce unique, facile à manipuler, dont les éléments peuvent être facilement fabriqués et assemblés à l'avance.

Le support d'échappement peut alors être fixé sur le véhicule en soudant les faces 16a, 16b de la pièce de fixation sur une paroi latérale sensiblement verticale 17a du longeron, et en soudant la plaque de renfort 15 au longeron et au sous-plancher (par exemple avec un soudage par points). De préférence, la plaque est soudée sous une paroi inférieure sensiblement horizontale 17b du longeron et au dessus du sous-plancher 19.

Plus précisément, la fixation du support d'échappement peut être réalisée de la manière suivante. Le support d'échappement est amené en butée (languettes 23) contre le dessous du plancher ou d'une paroi supérieure sensiblement horizontale 17c du longeron, et les faces 16a, 16b sont soudées sur la paroi latérale sensiblement verticale 17a du longeron. La plaque de renfort 15 est alors soudée sous la paroi inférieure sensiblement horizontale 17b du longeron. Un bord du sous-plancher 19 est ensuite fixé, sensiblement sur toute sa longueur, sur la paroi inférieure 17b du longeron, et le sous-plancher est glissé sous la plaque de renfort 15 à laquelle il est également soudé. Afin de permettre le passage du fil de support 14, le bord du sous-plancher présente une encoche (non représentée sur les figures), ou un orifice. Un autre ordre de fixation de ces pièces peut être envisagé en fonction de la dimension des différentes pièces, et notamment du sous-plancher, et de l'espace disponible à l'emplacement où doit être placé le support d'échappement.

Indépendamment, le fil de support d'échappement 12 est solidarisé à l'échappement 11 et au filtre amortisseur 13. L'extrémité inférieure 14a du fil de support 14 peut alors être emboîtée dans le filtre amortisseur 13 au dessus du fil de support d'échappement 12, avant ou après la fixation du support d'échappement (14, 15, 16).

## Revendications

1. Support d'échappement de véhicule automobile, apte à être fixé sur un longeron (17) et à un sous-plancher (19) du véhicule comportant,
un fil de support métallique (14) dont une extrémité inférieure (14a) est destinée à être reliée à l'échappement du véhicule (11), **caractérisé en ce qu'**il comprend :
- une plaque de renfort métallique (15) traversée sensiblement perpendiculairement par l'extrémité supérieure du fil (14b) et soudée à celle-ci, cette plaque de renfort (15) étant apte à être soudée au longeron et au sous-plancher, et
- une pièce de fixation métallique (16) solidarisée à l'extrémité supérieure du fil (14b) suivant l'axe de celui-ci et présentant de part et d'autre du fil deux faces (16a, 16b) s'étendant dans un même plan sensiblement vertical, ces deux faces (16a, 16b) étant aptes à être soudées sur une paroi latérale sensiblement verticale (17a) du longeron.

2. Support d'échappement selon la revendication 1, **caractérisé en ce que** la pièce de fixation (16) est une patte de fixation présentant une gorge (22) apte à recevoir l'extrémité supérieure du fil (14b) suivant sa direction axiale, la profondeur de la gorge étant suffisante pour que les faces (16a, 16b) de la patte situées de part et d'autre de la gorge puissent être fixées sur une paroi verticale du véhicule en appuyant l'extrémité supérieure du fil contre cette paroi.

3. Support d'échappement selon la revendication 2, **caractérisé en ce que** le bord supérieur de la patte de fixation est pourvu de deux languettes (23) s'étendant sensiblement parallèlement à la plaque de renfort (15) du côté opposé à l'ouverture de la gorge (22).

4. Support d'échappement selon l'une des revendications 1 à 3, **caractérisé en ce que** l'extrémité supérieure du fil (14b) est solidarisée à la pièce de fixation par soudage.

5. Dispositif de fixation d'un échappement de véhicule automobile, le véhicule automobile comportant un longeron (17) supportant un plancher (18) et un sous-plancher (19), le dispositif comportant un filtre amortisseur de vibrations (13) auquel est suspendu l'échappement du véhicule (11) au moyen d'un fil de support d'échappement (12), **caractérisé en ce qu'**il comprend un support d'échappement (14, 15, 16) selon l'une des revendications 1 à 4, dans lequel l'extrémité inférieure (14a) du fil de support (14) est emboîtée dans, et supporte, le filtre amortisseur (13); au dessus du fil de support d'échappement (12).

6. Procédé de fixation sur un véhicule automobile d'un support d'échappement selon l'une des revendications 1 à 4, le véhicule comportant un longeron (17) supportant un plancher (18) et un sous-plancher (19), **caractérisé en ce qu'**il comprend les étapes suivantes :
- souder les faces (16a, 16b) de la pièce de fixation du support sur une paroi sensiblement verticale (17a) du longeron,
- souder la plaque de renfort (15) sensiblement horizontalement au longeron (17) et au sous-plancher (19).

7. Procédé de fixation selon la revendication 6, **caractérisé en ce que** la plaque de renfort (15) est soudée sous le longeron (17) et au dessus du sous-plancher (19).

## Claims

1. Motor vehicle exhaust support designed to be fastened to a longitudinal member (12) and to a subfloor (19) of the vehicle, comprising a metal support rod (14) of which a lower end (14a) is intended to be connected to the vehicle exhaust (11), **characterized in that** it comprises:
- a metal reinforcing plate (15) traversed substantially perpendicularly by the upper end (14b) of the rod and welded to this end, this reinforcing plate (15) being designed to be welded to the longitudinal member and to the subfloor, and
- a metal fastening piece (16) secured to the upper end (14b) of the rod along the axis thereof and having, on either side of the rod, two faces (16a, 16b) extending in the same substantially vertical plane, these two faces (16a, 16b) being designed to be welded to a substantially vertical side wall (17a) of the longitudinal member.

2. Exhaust support according to Claim 1,
**characterized in that** the fastening piece (16) is a fastening bracket having a channel (22) designed to accommodate the upper end (14b) of the rod in its axial direction, the depth of the channel being sufficient to ensure that the faces (16a, 16b) of the bracket that are situated on either side of the channel can be fastened to a vertical wall of the vehicle by pressing the upper end of the rod against this wall.

3. Exhaust support according to Claim 2,
**characterized in that** the upper edge of the fastening bracket is provided with two tabs (23) extending substantially parallel to the reinforcing plate (15) on the opposite side to the opening of the channel (22).

4. Exhaust support according to one of Claims 1 to 3, **characterized in that** the upper end (14b) of the rod is secured to the fastening piece by welding.

5. Device for fastening a motor vehicle exhaust, the motor vehicle comprising a longitudinal member (17) supporting a floor (18) and a subfloor (19), the device comprising a vibration-damping filter (13) from which the vehicle exhaust (11) is suspended by means of an exhaust support rod (12), **characterized in that** it comprises an exhaust support (14, 15, 16) according to one of Claims 1 to 4, in which the lower end (14a) of the support rod (14) is fitted in, and supports, the damping filter (13), above the exhaust support rod (12).

6. Method for fastening to a motor vehicle an exhaust support according to one of Claims 1 to 4, the vehicle comprising a longitudinal member (17) supporting a floor (18) and a subfloor (19), **characterized in that** it comprises the following steps:
- welding the faces (16a, 16b) of the fastening piece of the support to a substantially vertical wall (17a) of the longitudinal member,
- welding the reinforcing plate (15) substantially horizontally to the longitudinal member (17) and to the subfloor (19).

7. Fastening method according to Claim 6,
**characterized in that** the reinforcing plate (15) is welded below the longitudinal member (17) and above the subfloor (19).

## Patentansprüche

1. Auspuffhalterung für ein Kraftfahrzeug, die an einem Längsträger (17) und an einem Unterboden (19) des Fahrzeugs befestigt werden kann und einen Stützdraht (14) aufweist, von dem ein unteres Ende (14a) mit dem Auspuff (11) des Fahrzeugs verbunden werden soll, **dadurch gekennzeichnet, dass** sie Folgendes umfasst:
- eine metallische Verstärkungsplatte (15), die im Wesentlichen senkrecht von dem oberen Ende (14b) des Drahtes durchquert wird und damit verschweißt ist, wobei diese Verstärkungsplatte (15) mit dem Längsträger und dem Unterboden verschweißt werden kann, und
- ein metallisches Befestigungsteil (16), das mit dem oberen Ende (14b) des Drahtes entlang dessen Achse fest verbunden ist und auf beiden Seiten des Drahtes zwei Flächen (16a, 16b) aufweist, die sich in einer im Wesentlichen vertikalen, gleichen Ebene erstrecken, wobei diese beiden Flächen (16a, 16b) mit einer im Wesentlichen vertikalen Seitenwand (17a) des Längsträgers verschweißt werden können.

2. Auspuffhalterung nach Anspruch 1, **dadurch gekennzeichnet, dass** das Befestigungsteil (16) ein Befestigungsansatz ist, der eine Kehle (22) aufweist, die das obere Ende (14b) des Drahtes entlang seiner Axialrichtung aufnehmen kann, wobei die Tiefe der Kehle ausreichend ist, damit die Flächen (16a, 16b) des Ansatzes, die sich auf beiden Seiten der Kehle befinden, an einer vertikalen Wand des Fahrzeugs unter Abstützung des oberen Endes des Drahtes an dieser Wand befestigt werden können.

3. Auspuffhalterung nach Anspruch 2, **dadurch gekennzeichnet, dass** der obere Rand des Befestigungsansatzes mit zwei Laschen (23) versehen ist, die sich im Wesentlichen parallel zu der Verstärkungsplatte (15) auf der gegenüberliegenden Seite von der Öffnung der Kehle (22) erstrecken.

4. Auspuffhalterung nach einem der Ansprüche 1 bis 3, **dadurch gekennzeichnet, dass** das obere Ende (14b) des Drahtes durch Schweißen fest mit dem Befestigungsteil verbunden ist.

5. Vorrichtung zur Befestigung eines Auspuffes für ein Kraftfahrzeug, wobei das Kraftfahrzeug einen Längsträger (17) aufweist, der einen Boden (18) und einen Unterboden (19) stützt, wobei die Vorrichtung einen Schwingungsdämpfungsfilter (13) aufweist, an dem der Auspuff (11) des Fahrzeugs mittels eines Auspuffstützdrahtes (12) aufgehängt ist, **dadurch gekennzeichnet, dass** sie eine Auspuffhalterung (14, 15, 16) nach einem der Ansprüche 1 bis 4 aufweist, bei der das untere Ende (14a) des Stützdrahtes (14) über dem Auspuffstützdraht (12) in den Dämpfungsfilter (13) eingefügt ist und diesen stützt.

6. Verfahren zur Befestigung einer Auspuffhalterung nach einem der Ansprüche 1 bis 4 an einem Kraftfahrzeug, wobei das Fahrzeug einen Längsträger (17) aufweist, der einen Boden (18) und einen Unterboden (19) stützt, **dadurch gekennzeichnet, dass** es die folgenden Schritte umfasst:
- Verschweißen der Flächen (16a, 16b) des Befestigungsteils der Halterung mit einer im Wesentlichen vertikalen Wand (17a) des Längsträgers,
- Verschweißen der Verstärkungsplatte (15) im Wesentlichen horizontal mit dem Längsträger (17) und dem Unterboden (19).

7. Befestigungsverfahren nach Anspruch 6, **dadurch gekennzeichnet, dass** die Verstärkungsplatte (15) unter dem Längsträger (17) und über dem Unterboden (19) verschweißt ist.
